# EUROPEAN PATENT APPLICATION

(11) **EP 4 714 542 A1**
(43) Date of publication of application: **25.03.2026**
(21) Application number: 24306548.9
(22) Date of filing: 20.09.2024
(51) Int. Cl.: B01J 31/24, B01J 23/46

(54) **FUNCTIONALIZED NANODIAMONDS AND CATALYSTS THEREOF FOR HIGH-FLOW RATE CATALYTIC OF H2 DELIVERY FROM SOLID STORAGE**

(71) Applicant: Université de Bourgogne, 21000 Dijon (FR); Centre National de la Recherche Scientifique, 75016 Paris (FR)
(72) Inventor: HIERSO, Jean-Cyrille, 21000 Dijon (FR); MBOYI, Clève Dionel, 21600 Longvic (FR); POINSOT, Didier, 21800 Chevigny Saint Sauveur (FR); BOUZID, Moad, 21240 Talant (FR); KARACAOGLAN, Gizem, 21000 Dijon (FR); KAHN, Myrtil L., 31000 Toulouse (FR)
(74) Representative: Bandpay & Greuter

(57) **Abstract**

The present invention relates to metallic nanoparticles stabilized by a diamondoid ligand. Nanoparticles, and networks of nanoparticles, of controlled small sizes below 10 nm, are used and recycled for the efficient delivering, in high rate, of hydrogen gas H₂, extracted from solid organic sources in hydrolysis and solvolysis reactions.

## Description

### Technical field

The present invention relates to nanoparticles stabilized with diamondoid ligands, and networks of these nanoparticles, and their use for the delivery of hydrogen (H₂) from chemical solid storage using borohydrides or borane compounds.

### Background art

France aims for carbon neutrality in 2050 (Law N°2019-1147 of 8 November 2019 relative to energy and climate). Among the objectives set by government, there is a focus on development of H₂ solution as decarbonated clean energy vector for the future energy mix (both at a storage and transport solution).

The existing solutions for H₂ storage are gaseous and/or liquid. However, these solutions require huge volume of storage and there are risks of accident linked to H₂, such as fire or explosion. Specific regulations relating to H₂ storage and conception and exploitation of H₂ distribution resorts have thus been created. There is thus a need to develop safer and economical routes for H₂ storage, notably in link with transportation and mobility applications but also concerning societal acceptability.

The chemical storage of H₂ under solid form represents a secure and clean energy vector. It is for example known the solid storage of H₂ under the form of light-mass solids, highly hydrogenated, able to release H2 upon thermolysis or solvolysis, in the presence of a catalyst or not, such as borane derivatives. However, there is a need to provide methods for controlled and secured delivery of H₂ via solid route. There is also a need to provide such method than can be more environmentally friendly and cost effective by using low traces of metal and/or and that enables to deliver very high-flow rate of H₂ in reduced time.

The development of specific, easily recoverable and recyclable, catalysts that can provide very high rates of extraction of H₂ from storable as secured solid sources, is a key issue in this perspective.

### Summary of the invention

The present invention relates to metallic nanoparticles stabilized by diamondoid ligands, wherein each diamondoid molecule is substituted by at least one group, identical or different, selected in the group consisting of PR₂;
wherein R, identical or different, represents H; a C₅-C₁₀ aryl group, preferably phenyl, a C₅-C₁₀ cycloalkyl group, preferably cyclohexyl; or a C₁-C₃₀ alkyl, preferably C₁-C₁₀ alkyl, more preferably C₁-C₅ alkyl, linear or branched, saturated or partially or totally unsaturated; preferably R is H;
wherein the metal of the nanoparticle is selected in the group consisting of Fe, Ni, Co, Cr, V, Rh, Ru, Os, Re, preferably Ni or Ru; and
wherein the atomic ratio of the metal of the nanoparticle to the ligand of the nanoparticle is equal or greater than 5/1, preferably comprised between 5/1 and 20/1, preferably comprised between 8/1 and 15/1.

Preferably, the metal of the nanoparticle is ruthenium, nickel, platinum, rhodium or cobalt, preferably ruthenium or nickel, preferably ruthenium.

According to one embodiment, the diamondoid ligand is chosen among compound having the formula :
- [CₙHₙ₊₆₋ₘ](PR₂)ₘ, wherein:
   - n is 10, 14, 18, 22, 26 or 30
   - m is from 1 to 10, preferably from 1 to 6, more preferably from 1 to 4, even more preferably m is 2
   - R, identical or different, represents H; a C₅-C₁₀ aryl group, preferably phenyl, a C₅-C₁₀ cycloalkyl group, or a C₁-C₃₀ preferably C₁-C₁₀ alkyl, more preferably C₁-C₅ alkyl, linear or branched, saturated or partially or totally unsaturated; preferably R is H.
- [C_{10q}H_{16q-r-s}](PR₂)ₛ, wherein:
   - q is 2 or 3
   - r is 2 when q is 2, r is 4 when q is 3
   - s is from 1 to 10, preferably from 1 to 6, more preferably from 1 to 4; even more preferably s is 2
   - R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

According to one embodiment, the diamondoid ligand is chosen among compounds having the following formula (I) or (II): 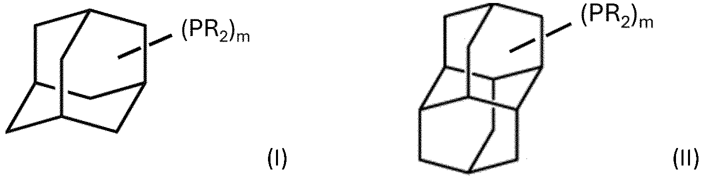
wherein m is from 1 to 6 in formula (I), preferably from 1 to 4, more preferably m is 2, and m is from 1 to 8 in formula (II), preferably from 1 to 6, more preferably from 1 to 4, even more preferably m is 2
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

In the above embodiments, R is preferably H.

The invention also relates to the use of a metallic nanoparticle stabilized by diamondoid ligands,
wherein each diamondoid molecule is substituted by at least one group, identical or different, selected in the group consisting of COOR, PR₂, SR or NR₂;
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H;
wherein the metal of the nanoparticle is selected in the group consisting of Fe, Ni, Co, Cr, V, Rh, Ru, Os, Re, preferably Ni or Ru; and
wherein the atomic ratio of the metal of the nanoparticle to the ligand of the nanoparticle is equal or greater than 5/1, preferably comprised between 5/1 and 20/1, preferably comprised between 8/1 and 15/1,
as catalyst for the recovery of H₂ by hydrolysis or solvolysis of borohydrides or borane compounds, wherein the solvent is preferentially a polar hydrogen donor, more preferentially an alcohol or water.

The present invention also relates to a process for recovering H₂ from borohydrides or borane compounds by hydrolysis or solvolysis in the presence of a metallic nanoparticle as disclosed above.

In one embodiment, the diamondoid ligand is chosen among compound having the formula :
- [CₙHₙ₊₆₋ₘ](Z)ₘ, wherein:
   - Z is selected in the group of COOR, PR₂, SR or NR₂
   - n is 10, 14, 18, 22, 26 or 30
   - m is from 1 to 10, preferably from 1 to 6, more preferably from 1 to 4, even more preferably m is 2
   - R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H,
- [C_{10q}H_{16q-r-s}](Z)ₛ, wherein:
   - Z is selected in the group of COOR, PR₂, SR or NR₂
   - q is 2 or 3
   - r is 2 when q is 2, r is 4 when q is 3
   - s is from 1 to 10, preferably from 1 to 6, more preferably from 1 to 4; even more preferably s is 2
   - R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

In one embodiment, the diamondoid ligand is chosen among compounds having the following formula (VIII) or (IX): 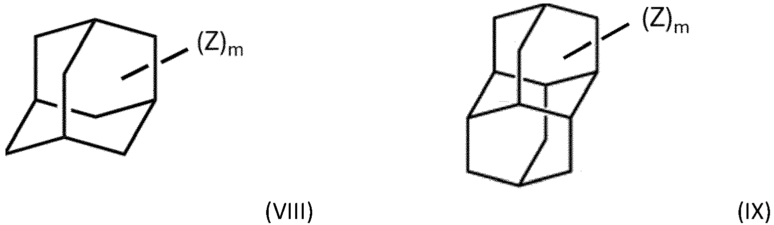 Wherein:
- Z is selected in the group of -COOR, -PR₂, SR or -NR₂, preferably -COOR, -PR₂, or - NR₂, more preferably -COOR, -PR₂;
- wherein m is from 1 to 6 in formula (VIII), preferably from 1 to 4, more preferably m is 2, and m is from 1 to 8 in formula (IX), preferably from 1 to 6, more preferably from 1 to 4, even more preferably m is 2
- R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

In one embodiment, borohydrides are sodium borohydride (NaBH₄) or lithium borohydride (LiBH₄).

In one embodiment, borane compounds are amine-borane or analogous amine-borane, hydrazine-borane.

Preferably, the analogous amine-borane is of formula NR₂'H-BH₃ or BH₃-NR₂'-(CH₂)ₘ- NR₂'-BH₃, wherein R' identical or different, represent H, a C₅-C₁₀ aryl group, preferably a phenyl group; or a C₁-C₃₀, preferably C₁-C₁₀ alkyl, more preferably C₁-C₅ alkyl group, linear or branched, saturated or unsaturated, m is 1, 2 or 3, preferably, the amine-borane is NH₃-BH₃ (AB), NMeH₂-BH₃ (methylamineborane MeAB), NMe₂H-BH₃ (dimethyl amine-borane DMAB) or H₃B-NH₂CH₂CH₂H₂N-BH₃ (ethylene diamine bisborane EDAB).

In one embodiment, the solvolysis is carried out using ethanol.

Preferably, the reaction is carried out at a temperature comprised between - 90 °C and 100 °C, preferably between -40 °C and 80 °C, more preferentially between 0 °C and 30 °C, more preferentially 20 °C.

Preferably, the reaction is carried out so that the molar ratio of metal from the nanoparticle to the borane compound is comprised between 0.0001 and 0.1, preferably between 0.001 and 0.05, more preferentially between 0.01 and 0.025.

In one embodiment, the process according to the invention further comprises a step of recycling the nanoparticles, preferably carried out by recovering the nanoparticles and washing the recovered nanoparticles with the solvent used for the hydrolysis or solvolysis of the borane compound.

### Brief description of the Figure

The diamondoid ligands present the advantage to have a highly regular and rigid structure with chemical functional groups. This enables to stabilize the surface of the individual nanoparticles by strong bonds, but also the advantage to link the nanoparticles together in dense networks. The formation of a network during nanoparticles growth advantageously enables to control the size of the nanoparticles, preferably between 1 and 3 nm with a narrow particle size distribution. Narrow particle size distribution is characterized by a standard deviation of the particle size of at most 1 nm. Interparticle distance corresponds to nanoparticles surface to surface distance. Such small size and high density of metallic nanoparticles advantageously lead to high activity because of large exposed metal surface. This approach to stabilize nanoparticles, without external supplementary support of the oxide or carbon also makes it possible to overcome the possible instability of isolated nanoparticles.

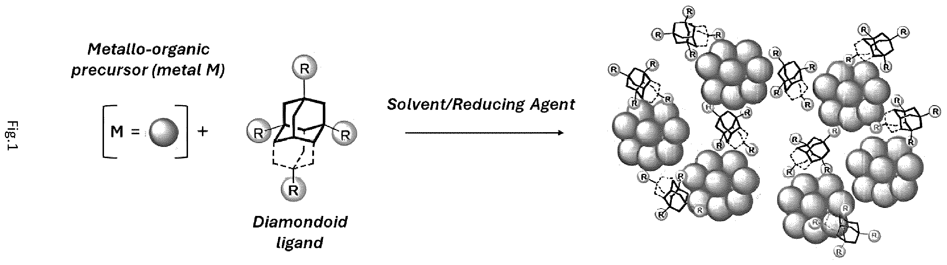

Figure 1 represents a fragment of three nanoparticles stabilized with diamondoid ligand according to the invention and forming a network.

### Detailed description

The invention is now described in more detail and in a non-limiting manner in the following description.

The following terms and expressions contained herein are defined as follows.

As used herein, the term "diamondoid" (alternatively named " nanodiamond", ND) refers to hydrocarbons containing at least one adamantane unit or largely superimposable on the diamond lattice. Typically, one or more adamantane units are present, the diamondoid can be classified according to their number of carbon atoms.

All other terms used in the description of the present invention have their meanings as is well-known in the art.

The present invention relates to metallic nanoparticle stabilized by diamondoid ligands, wherein each diamondoid molecule is substituted by at least one group, identical or different, selected in the group consisting of PR₂;
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally or unsaturated; preferably R is H;
wherein the metal of the nanoparticle is selected in the group consisting of Fe, Ni, Co, Cr, V, Rh, Ru, Os, Re, preferably Ni or Ru; and
wherein the atomic ratio of the metal of the nanoparticle to the ligand of the nanoparticle is equal or greater than 5/1, preferably comprised between 5/1 and 20/1, preferably comprised between 8/1 and 15/1.

Preferably, the metallic nanoparticles have a mean diameter, as measured from transmission electronic microscopy in the solid state or diffusion light scattering in liquid dispersion, comprised between 0.5 and 50 nm, preferably between 0.5 and 10 nm, more preferably between 0.5 and 2 nm.

Preferably, the diamondoid ligand is chosen among compound of formula :
- [CₙHₙ₊₆₋ₘ](PR₂)ₘ, wherein:
   - n is 10, 14, 18, 22, 26 or 30
   - m is from 1 to 10, preferably from 1 to 6, more preferably from 1 to 4; even more preferably m is 2
   - R, identical or different, represents H; a C₅-C₁₀ aryl group, preferably phenyl, a C₅-C₁₀ cycloalkyl group, preferably cyclohexyl ; or a C₁-C₃₀ preferably C₁-C₁₀ alkyl, more preferably C₁-C₅ alkyl, linear or branched, saturated or partially or totally or unsaturated; preferably R is H ;
- [C_{10q}H_{16q-r-s}](PR₂)ₛ, wherein:
   - q is 2 or 3
   - r is 2 when q is 2, r is 4 when q is 3
   - s is from 1 to 10, preferably from 1 to 6, more preferably from 1 to 4; even more preferably s is 2
   - R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

The diamondoid ligand is chosen among compound having the following formula (I), (II), (III), (IV) or (V) 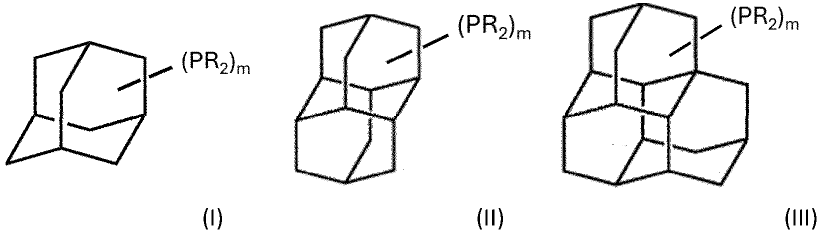 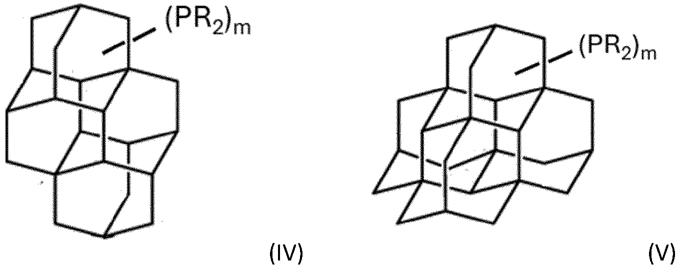 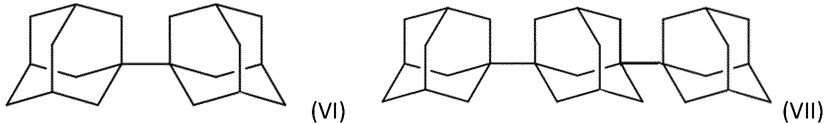
wherein m is from 1 to 6 in formula (I), preferably from 1 to 4, more preferably m is 2; m is from 1 to 8 in formula (II), preferably from 1 to 6, more preferably from 1 to 4, even more preferably m is 2, m is from 1 to 10 in formula (III) to (V), preferably from 1 to 6, more preferably from 1 to 4; even more preferably m is 2;
wherein in formula (VI) and (VII) 1 to 10 hydrogen atoms, preferably 1 to 6, more preferably from 1 to 4, even more preferably 2 hydrogen atoms, is substituted by PR₂;
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

Preferably, the diamondoid ligand is of formula (I), (II) or (VI).

Preferably, the diamondoid ligand is of formula (I), (II) or (VI) and PR₂ is PH₂.

Preferably, the diamondoid ligand is of formula (I), (II) or (VI) and m is 2.

Preferably, the diamondoid ligand is of formula (I), (II) or (VI), m is 2 and PR₂ is PH₂.

Preferably, the diamondoid ligand is of formula (I) or (II).

Preferably, the diamondoid ligand is of formula (I) or (II) and PR₂ is PH₂.

Preferably, the diamondoid ligand is of formula (I) or (II) and m is 2.

Preferably, the diamondoid ligand is of formula (I) or (II), m is 2 and PR₂ is PH₂.

Preferably, the diamondoid ligand is of formula (I) or (II) and comprises two groups PR₂, preferably PH₂, in positions 1 and 3 in formula (I) and positions 4 et 9 in formula (II). Positions of PR₂ formula (I) and (II) are illustrated below.

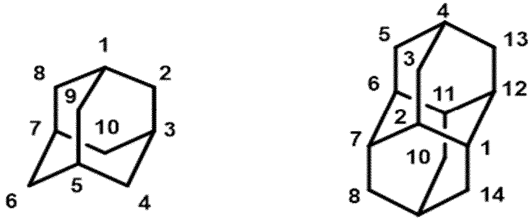

Preferably, R of diamondoid ligand of the metallic nanoparticle is H.

The diamondoid ligand according to the present invention can be synthetized by method known by the skilled person and especially following the process disclosed in: Min Y., Nasrallah H., Poinsot D., Lecante P., Tison Y., Martinez H., Roblin P., Falqui A., Poteau R., Rosal I., Gerber I. C., Hierso J-C., Axet M. R., Serp P. 3D ruthenium nanoparticle covalent assemblies from polymantane ligands for confined catalysis. Chemistry of Materials 2020, 32, 2365-2378; Moncea O., Gunawan M. A., Poinsot D., Cattey H., Becker J., Yurchenko R. I., Butova E. D., Hausmann H., Sekutor M., Fokin A. A., Hierso J-C., Schreiner P. R. The Journal of Organic Chemistry. 2016, 81, 8759-8769.

When each diamondoid ligand is substituted by at least one group, identical or different, of formula PR₂ such as defined above with R is H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated, the nanoparticles are arranged in the form of a network of different nanoparticles linked by diamondoid ligand.

Advantageously, when a nanoparticle network is formed each nanoparticle has a mean diameter, as measured from transmission electronic microscopy in the solid state or diffusion light scattering in liquid dispersion, comprised between 0.5 and 10 nm, more preferably between 0.5 and 2 nm. Advantageously, the inventors have found that the network formation enables to control the nanoparticle size to the most reduced size.

The metal of the nanoparticle is preferably, ruthenium, nickel, platinum, rhodium, cobalt, preferably nickel or ruthenium, more preferably ruthenium. This preferable embodiment can be combined with any of definition of the diamondoid ligand and preferred diamondoid ligand given above.

The nanoparticle stabilized by the diamondoid ligand according to the present invention can be prepared by mixing an excess of a metallo-organic complex as molecular precursor of nanoparticles formation with diamondoid ligand, in the presence of a metal reducing agent (preferably hydrogen H₂, LiAlH₄, NaBH₄, etc.) in a suitable solvent (preferably not or weakly coordinating, toluene, THF, etc.) at mild temperature (below 100 °C) for short reaction times (preferably below 24 h). The preferably diamondoid ligand because of its polar sites is able to coordinate metal atoms either as a chelating agent at the surface of a single nanoparticle, or as a linker between two nanoparticle surfaces. The atomic ratio of the metal of the nanoparticle to the metal of the metallocene is greater than 5/1, preferably comprised between 5/1 and 20/1, preferably comprised between 8/1 and 15/1.

As a typical example, the metallo-organic complex as molecular precursor of nanoparticles formation is the bis(2-methylallyl)(1,5-cyclooctadiene)ruthenium(II) complex. The solvent is preferably the aprotic solvent tetrahydrofuran (THF). The diamondoid ligand is preferably the 4,9-diphosphinodiamantane. The resulting solution is preferably pressurized with 3 bars of H₂ and heated under stirring at 60 °C overnight. The nanoparticles stabilized by the diamondoid ligand, according to the present invention, shall be distinguished from metallic complexes, which are formed from one metal and one ligand reaction, or when a ratio of less than five metal for one ligand is used in the synthesis.

The present invention also relates to the use of a metallic nanoparticle stabilized by diamondoid ligands,
wherein each diamondoid molecule is substituted by at least one group, identical or different, selected in the group consisting of COOR, PR₂, SR or NR₂;
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H;
wherein the metal of the nanoparticle is selected in the group consisting of Fe, Ni, Co, Cr, V, Rh, Ru, Os, Re, preferably Ni or Ru; and wherein the atomic ratio of the metal of the nanoparticle to the ligand of the nanoparticle is equal or greater than 5/1, preferably comprised between 5/1 and 20/1, preferably comprised between 8/1 and 15/1, as catalyst for the recovery of H₂ by hydrolysis or solvolysis of borohydrides or borane compounds, wherein the solvent is preferentially a polar hydrogen donor, more preferentially an alcohol or water.

Preferably, the metallic nanoparticle of the invention used as a catalyst contains diamondoid ligand chosen among compound having the formula
- [CₙHₙ₊₆₋ₘ](Z)ₘ, wherein:
   - Z is selected in the group of COOR, PR₂, SR or NR₂, preferably COOR, PR₂, or NR₂, preferably COOR or PR₂;
   - n is 10, 14, 18, 22, 26 or 30, preferably 10 or 14;
   - m is from 1 to 10, preferably from 1 to 6, more preferably from 1 to 4, even more preferably m is 2;
   - R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H,
- [C_{10q}H_{16q-r-s}](Z)ₛ, wherein:
   - Z is selected in the group of COOR, PR₂, SR or NR₂, preferably COOR, PR₂, or NR₂, preferably COOR or PR₂;
   - q is 2 or 3
   - r is 2 when q is 2, r is 4 when q is 3
   - s is from 1 to 10, preferably from 1 to 6, more preferably from 1 to 4; even more preferably s is 2
   - R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

Preferably, Z is COOR or PR₂ wherein R is as defined above, preferably R is H.

Preferably, m is 2, Z is COOR or PR₂ wherein R is as defined above, preferably R is H.

Preferably, the diamondoid ligand of the metallic nanoparticle used as a catalyst is chosen among compound having the following formula (VIII) or (XIV) 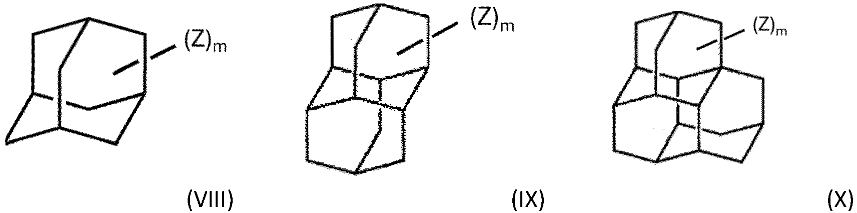 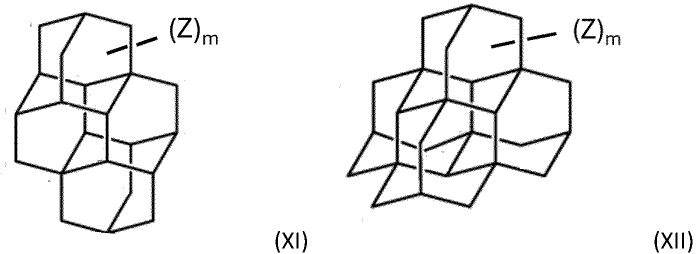 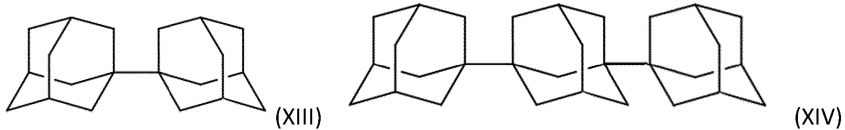
wherein Z represents at least one group, identical or different, selected in the group consisting of COOR, PR₂, SR or NR₂, preferably COOR, PR₂, or NR₂, preferably COOR or PR₂;
wherein m is from 1 to 6 in formula (VIII), preferably from 1 to 4, more preferably m is 2; m is from 1 to 8 in formula (IX), preferably from 1 to 6, more preferably from 1 to 4, even more preferably m is 2, m is from 1 to 10 in formula (X) to (XII), preferably from 1 to 6, more preferably from 1 to 4; even more preferably m is 2.
wherein in formula (XIII) and (XIV), from 1 to 10, preferably from 1 to 6, more preferably from 1 to 4, even more preferably 2, hydrogen atom is substituted by Z,
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

Preferably, the diamondoid ligand of the metallic nanoparticle used as a catalyst is of formula (VIII), (IX) or (XIII).

Preferably, the diamondoid ligand of the metallic nanoparticle used as a catalyst is of formula (VIII), (IX) or (XIII) and m is 2.

Preferably, the diamondoid ligand of the metallic nanoparticle used as a catalyst is of formula (VIII), (IX) or (XIII) and Z is COOR or PR₂.

Preferably, the diamondoid ligand of the metallic nanoparticle used as a catalyst is of formula (VIII), (IX) or (XIII), m is 2 and Z is COOR or PR₂.

Preferably, the diamondoid ligand of the metallic nanoparticle used as a catalyst is of formula (VIII), (IX) or (XIII) and Z is COOH or PH₂.

Preferably, the diamondoid ligand of the metallic nanoparticle used as a catalyst is of formula (VIII), (IX) or (XIII), m is 2 and Z is COOH or PH₂.

Preferably, the diamondoid ligand of the metallic nanoparticle used as a catalyst is of formula (VIII) or (IX).

Preferably, the diamondoid ligand of the metallic nanoparticle used as a catalyst is of formula (VIII) or (IX) and m is 2.

Preferably, the diamondoid ligand of the metallic nanoparticle used as a catalyst is of formula (VIII) or (IX) and Z is COOR or PR₂.

Preferably, the diamondoid ligand of the metallic nanoparticle used as a catalyst is of formula (VIII) or (IX), m is 2 and Z is COOR or PR₂.

Preferably, the diamondoid ligand of the metallic nanoparticle used as a catalyst is of formula (VIII) or (IX) and Z is COOH or PH₂.

Preferably, the diamondoid ligand of the metallic nanoparticle used as a catalyst is of formula (VIII) or (IX), m is 2 and Z is COOH or PH₂.

Preferably, the diamondoid ligand of the metallic nanoparticle used as a catalyst is of formula (VIII) or (IX) and comprises two group Z in positions 1 and 3 in formula (VIII) and positions 4 et 9 in formula (IX). Positions of formula (VIII) and (IX) are illustrated below.

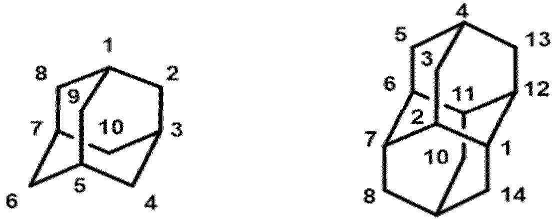

Preferably, in the diamondoid ligand of the metallic nanoparticle used as a catalyst, Z is COOH or PR₂ and preferably, R, of diamondoid ligand of the metallic nanoparticle used as a catalyst, is H.

The present invention also relates to a process for recovering H₂ from borohydrides or boranes compounds by hydrolysis or solvolysis in the presence of a metallic nanoparticle as defined above.

Preferably, borane compounds are amine-boranes or analogous amine-boranes, hydrazine-borane.

Preferably, borohydrides are sodium borohydride (NaBH₄) or lithium borohydride (LiBH₄).

Preferably, the analogous amine-borane is of formula NR₂'H-BH₃ or BH₃-NR₂'-(CH₂)ₘ- NR₂'-BH₃, wherein R' identical or different, represent H, a C₅-C₁₀ aryl group, preferably a phenyl group; or a C₁-C₃₀, preferably C₁-C₁₀ alkyl, more preferably C₁-C₅ alkyl group, linear or branched, saturated or unsaturated, m is 1, 2 or 3, preferably, the amine-borane is NH₃-BH₃ (AB), NMeH₂-BH₃ (methylamineborane MeAB), NMe₂H-BH₃ (dimethyl amine-borane DMAB) or H₃B-NH₂CH₂CH₂H₂N-BH₃ (ethylene diamine bisborane EDAB).

Advantageously, the delivery of H₂ in the present invention can be done either by hydrolysis or solvolysis of bororohydrides, amine-boranes, analogous amine-boranes or hydrazine-borane compounds. The use of water or solvent enables to cover a large range of temperatures to implement the process. Indeed, with water it is possible to implement the process between 0 °C and 100 °C, whereas by choosing another solvent it is possible to implement the process at lower temperature. This is of particular interest for application where the external temperature has an influence, for example in automotive field.

The process can thus be carried out at a temperature comprised between the temperature of -90 °C and 100 °C, preferably between -40 °C and 80 °C, more preferentially between 0 °C and 30 °C, more preferentially 20 °C.

Preferably, the solvent is a polar hydrogen donor. The polar hydrogen donor is preferably an alcohol. The alcohol is for example monoalcohol or polyol, preferably monoalcohol. The monoalcohol can be chosen among ethanol or methanol. The polyol is for example polyalkylene glycol, preferably polyethyelene glycol. Preferably, the solvent is methanol or ethanol.

The amine-borane that can be used in the present invention is not particularly limited. Preferably, the amine-borane is of formula NR₂'H→BH₃ or BH₃←NR₂'-(CH₂)ₘ-NR₂'→BH₃, wherein R' identical or different, represent H, a C₅-C₁₀ aryl group, preferably phenyl; or a C₁-C₃₀, preferably C₁-C₁₀ alkyl, more preferably C₁-C₅ alkyl group, linear or branched, saturated or unsaturated; m is 1, 2 or 3. Preferably, the amine-borane is NH₃→BH₃ (ammonia-borane, AB), NMeH₂→BH₃ (methylamine borane, MeAB), NMe₂H→BH₃ (dimethyl amine-borane, DMAB) or H₃B←NH₂(CH₂)₂H₂N→BH₃ (ethylene diamine bis-borane, EDAB). The hydrazine-borane according to the invention is a compound of formula N₂H₄-BH₃ (HB).

Preferably, in the process of delivery of H₂ from borohydrides or borane compounds according to the invention, the nanoparticle according to the invention is used so that the molar ratio of metal from the nanoparticle to the borane compound is comprised between 0.0001 and 0.1, preferably between 0.001 and 0.05, more preferentially between 0.01 and 0.025.

Advantageously, the nanoparticle according to the invention can be recycled and reused in the process. The recycling of the nanoparticle according to the invention can be done by recovering the nanoparticle and then washing the recovered nanoparticles with the solvent used for the hydrolysis or solvolysis of the borohydrides or borane compounds, possibly in combination or with non-polar hydrocarbon solvent (preferably pentane). The recovery of the nanoparticle according to the invention can be done by any method known by the skilled person and for example by centrifugation.

The invention is now described with respect to the following non limiting examples.

### Examples

### Materials and Methods:

### General synthetic conditions

The solvents were purified with a solvent purification system MBraun SPS-800 solvent purification system and degassed by freezing cycles. The other reagents and precursors were purchased from Commercial Suppliers and used without purifications. The glassware was oven-dried at 100°C before use. All reactions were performed under an atmosphere of dry argon in Schlenk tubes, Fisher-Porter bottle or two-necked flask. Bis(2-methylallyl)(1,5-cyclooctadiene)ruthenium(II) complex was purchased from commercial sources. The ligands 1,3-Adamantanedicarboxylic, 4,9-Diamantanedicarboxylic acid and 4,9-Diamantanediphosphine were synthesized according to the processes described in the scientific literature, and especially referring to: Min Y., Nasrallah H., Poinsot D., Lecante P., Tison Y., Martinez H., Roblin P., Falqui A., Poteau R., Rosal I., Gerber I. C., Hierso J-C., Axet M. R., Serp P. 3D ruthenium nanoparticle covalent assemblies from polymantane ligands for confined catalysis. Chemistry of Materials 2020, 32, 2365-2378; Moncea O., Gunawan M. A., Poinsot D., Cattey H., Becker J., Yurchenko R. I., Butova E. D., Hausmann H., Sekutor M., Fokin A. A., Hierso J-C., Schreiner P. R. The Journal of Organic Chemistry. 2016, 81, 8759-8769.

### Preparation of Ad(COOH)₂

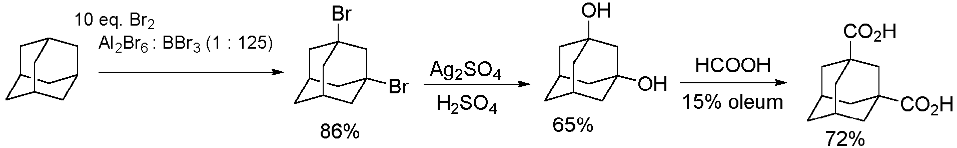

### Synthesis of ligands DAd(COOH)₂ and DAd(PH₂)₂

### Preparation of 4,9-Diamantanedicarboxylic Acid DAd(COOH)₂

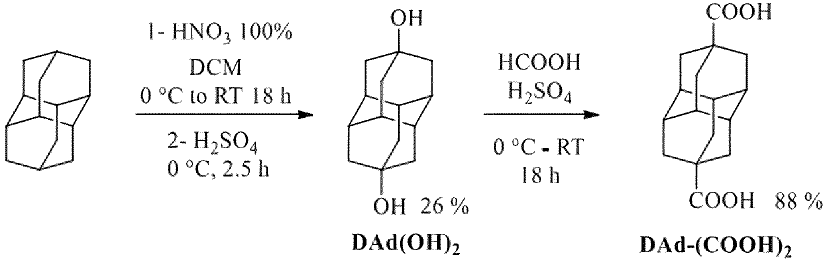

### Preparation of 4,9-Diamantanediphosphine DAd(PH)₂

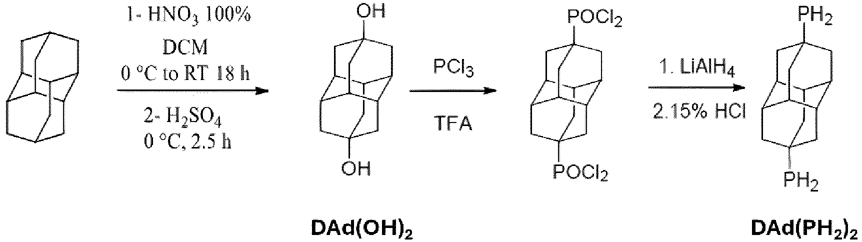

### General procedure for the synthesis of Ru NPs stabilized by diamondoid ligands

The bis(2-methylallyl)(1,5-cyclooctadiene)ruthenium(II) complex and the desired ligand were introduced in a Fisher-Porter bottle, and left in vacuum during 30 minutes. Anhydrous tetrahydrofuran (THF) was then added and the mixture was stirred 1 h under argon at room temperature. The resulting clear solution was pressurized with 3 bars of H₂. The solution was kept under stirring and heated overnight at 60 °C. After this period of time, excess of H₂ was eliminated and the volume of the solvent was reduced to approximately 10 mL under vacuum. Pentane was then added to the colloidal suspension. After several hours, a dark precipitate appeared. The solution was then filtered under argon atmosphere using a cannula, washed with pentane two times and dried under vacuum giving rise to nanoparticles as black powder.

### General procedure for hydrolysis of sodium borohydride (SB) with a catalyst

A solution of sodium borohydride (SB, NaBH₄) in water (2 mmol SB) was added to a colloidal suspension of the Ru nanoparticles (0.02 mmol Ru) in water thermoregulated to 20 °C using syringe under stirring at 600 rpm in 25 mL double-necked round-bottomed flask. H₂ generation was monitored by registering the increase of pressure in a gas burette. Once the reaction of SB dehydrogenation was complete, the catalyst was recovered by centrifugation and washed 3 times with water (i. e. solvolysis solvent) in order to use it for the next cycle. Water and a solution of SB in water (1 mmol) were successively added to the nanoparticles and H₂ generation was again monitored.

### General procedure for ethanolysis of ammonia-borane (AB) with a catalyst

A solution of ammonia-borane (AB, NH₃BH₃) in ethanol (2 mmol AB) was added to a colloidal suspension of the Ru nanoparticles (0.02 mmol Ru) in ethanol thermoregulated to 20 °C using syringe under stirring at 600 rpm in 25 mL double-necked round-bottomed flask. H₂ generation was monitored by registering the increase of pressure in a gas burette. In addition, pH of the water bubbler was monitored to detect possible ammonia release. No detectable change in pH was observed. Once the reaction of AB dehydrogenation was complete, the catalyst was recovered by centrifugation and washed 3 times with ethanol (i.e., solvolysis solvent) in order to use it for the next cycle. Ethanol and a solution of AB in ethanol (1 mmol) were successively added to the nanoparticles and H₂ generation was again monitored.

### Preparation of non-stabilized particles (comparative examples)

The bis(2-methylallyl)(1,5-cyclooctadiene)ruthenium(II) complex is pressurized with 3 bars of H₂ in THF at 60 °C during 18 hours. After evaporation of THF, the particles are precipitated with pentane and recovered by centrifugation.

### Results of hydrolysis of sodium borohydride

The conditions of the hydrolysis of sodium borohydride (SB) at 293 K, are the following:
SB: 167 mM in H₂O, Ru: 0.02 mmol, 3.33 mM

The TOF (mol_{H2}.mol_{cat}⁻¹.min⁻¹) is calculated as follows: mmol H₂/(mmol Ru.min⁻¹).

| **Assay** | **Ru/L (L=Ad(COOH)₂ )-ratio** | **Reaction time (min)** | **TOF (min⁻¹)** |
|---|---|---|---|
| **1** | 20/1 | 6.3 | 64.0 |
| **2** | 10/1 | 3.3 | 116.0 |
| **3** | 10/1 | 3.3 | 120.0 |
| **4** | 10/1 | 2.8 | 148.0 |
| **5** | 5/1 | 28 | 16.0 |
| **6 (Comparative example)** | 1/0 (no ligand) | 31 | 12.0 |
| **7 (Comparative example)** | 0/0 (no catalyst) | 2100 | 0.06 |

### Results of hydrolysis of ammonia-borane

The conditions of the hydrolysis of ammonia-borane at 293 K, are the following:
AB: 187 mM in H₂O, Ru: 0.02 mmol, 3.33 mM

The TOF (mol_{H2}.mol_{cat}⁻¹.min⁻¹) is calculated as follows: mmol H₂/(mmol Ru.min⁻¹).

| **Assay** | **Ru/L-ratio** | **Reaction time (min)** | **TOF (min⁻¹)** |
|---|---|---|---|
| **8** | 20/1 (L=Ad(COOH)₂) | 2.5 | 120 |
| **9** | 20/1 (L=DAd(COOH)₂) | 2.1 | 163 |
| **10** | 20/1 (L=DAd(PH)₂) | 2.1 | 164 |
| **11** | 10/1 (L=Ad(COOH)₂) | 1.5 | 210 |
| **12** | 10/1 (L=DAd(COOH)₂) | 2.3 | 142 |
| **13** | 10/1 (L=DAd(PH)₂) | 1.3 | 260 |
| **14 (Comparative example)** | 1/0 (no ligand) | 14 | 11 |

### Results of hydrolysis of ammonia-borane (AB) with different concentrations

The conditions of the hydrolysis of ammonia-borane at 293 K (20 ° C), are the following:
AB: 6.9 M in H₂O, Ru: 0.02 mmol, 34.72 mM

The TOF (mol_{H2}.mol_{cat}⁻¹.min⁻¹) is calculated as follows: mmol H₂/(mmol Ru.min⁻¹).

| **Assay** | **Ru/AB** | **Ru/L (L= Ad(COOH)₂)-ratio** | **Reaction time (min)** | **TOF (min⁻¹)** |
|---|---|---|---|---|
| **15** | 0.02 | 10/1 | 0.25 | 1374 |
| **16** | 0.01 | 10/1 | 0.34 | 1099 |
| **17** | 0.001 | 10/1 | 24 | 268 |
| **18** | 0.0002 | 10/1 | 360 | 86 |
| **19** | 0.0001 | 10/1 | 1380 | 40 |

The results clearly show that the nanoparticles of the present invention enable to deliver great amount of H₂ in reduced time (short reaction time) at very high flowrate (high TOFs) with the use of water as solvent (examples 1 to 5, 8 to 13, 15 to 19), this in comparison to the particles non-stabilized by the diamondoid ligands (**Comparative examples 6 and 14**) or without catalyst (**comparative example 7**). In addition, the nanoparticles of the present invention cost-effective and more environmentally friendly by using low traces of metal (low Ru/AB molar ratio, examples 12 to 16). This is attributed in part to the organization in networks using diamondoid ligands that contributes to both controlling the small size of nanoparticles, and favoring their global stability. Since the process can use different solvent and for example water and alcohol, it is thus implementable whatever the temperature, i. e. even if the temperature is well below 0 °C. At higher temperature the activity measured in TOF (min⁻¹) is greatly enhanced above the present values.

## Claims

1. Metallic nanoparticle stabilized by diamondoid ligands,
wherein each diamondoid molecule is substituted by at least one group, identical or different, selected in the group consisting of PR₂;
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H;
wherein the metal of the nanoparticle is selected in the group consisting of Fe, Ni, Co, Cr, V, Rh, Ru, Os, Re, preferably Ni or Ru; and
wherein the atomic ratio of the metal of the nanoparticle to the ligand of the nanoparticle is equal or greater than 5/1, preferably comprised between 5/1 and 20/1, preferably comprised between 8/1 and 15/1.

2. Metallic nanoparticle according to claim 1, wherein the metal of the nanoparticle is ruthenium, nickel, platinum, rhodium or cobalt, preferably ruthenium or nickel, preferably ruthenium.

3. Metallic nanoparticle according to any one of claims 1 and 2, wherein the diamondoid ligand is chosen among compound having the formula
- [CₙHₙ₊₆₋ₘ](PR₂)ₘ, wherein:
• n is 10, 14, 18, 22, 26 or 30
• m is from 1 to 10, preferably from 1 to 6, more preferably from 1 to 4, even more preferably m is 2
• R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H;
- [C_{10q}H_{16q-r-s}](PR₂)ₛ, wherein:
• q is 2 or 3
• r is 2 when q is 2, r is 4 when q is 3
• s is from 1 to 10, preferably from 1 to 6, more preferably from 1 to 4; even more preferably s is 2
• R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

4. Metallic nanoparticle according to any one of claims 1 to 3, wherein the diamondoid ligand is chosen among compound having the following formula (I) or (II) 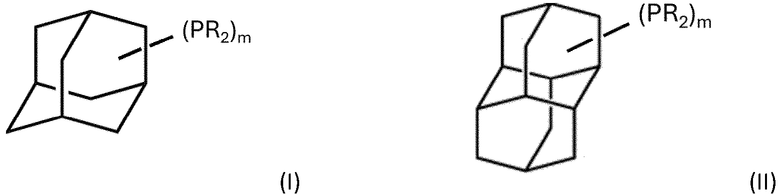
wherein -PR₂ can occupy any position in formula (I) or (II),
wherein m is from 1 to 6 in formula (I), preferably from 1 to 4, more preferably m is 2, and m is from 1 to 8 in formula (II), preferably from 1 to 6, more preferably from 1 to 4, even more preferably m is 2,
wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

5. Metallic nanoparticle according to any one of claims 1 to 4, wherein:
- m is 2; or
- R is H; or
- m is 2 and R is H.

6. Use of a metallic nanoparticle stabilized by diamondoid ligands,
Wherein each diamondoid molecule is substituted by at least one group, identical or different, selected in the group consisting of COOR, SR, PR₂ or NR₂; wherein R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H;
wherein the metal of the nanoparticle is selected in the group consisting of Fe, Ni, Co, Cr, V, Rh, Ru, Os, Re, preferably Ni or Ru; and
wherein the atomic ratio of the metal of the nanoparticle to the ligand of the nanoparticle is equal or greater than 5/1, preferably comprised between 5/1 and 20/1, preferably comprised between 8/1 and 15/1,
as catalyst for the recovery of H₂ by hydrolysis or solvolysis of borohydrides or borane compounds, wherein the solvent is preferentially a polar hydrogen donor, more preferentially an alcohol or water.

7. Use according to claim 6, wherein the diamondoid ligand is chosen among compound having the formula
- [CₙHₙ₊₆₋ₘ](Z)ₘ, wherein:
• Z is selected in the group of COOR, PR₂, SR or NR₂
• n is 10, 14, 18, 22, 26 or 30
• m is from 1 to 10, preferably from 1 to 6, more preferably from 1 to 4, even more preferably m is 2
• R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or unsaturated; preferably R is H,
- [C_{10q}H_{16q-r-s}](Z)ₛ, wherein:
• Z is selected in the group of COOR, PR₂, SR or NR₂
• q is 2 or 3
• r is 2 when q is 2, r is 4 when q is 3
• s is from 1 to 10, preferably from 1 to 6, more preferably from 1 to 4; even more preferably s is 2
• R, identical or different, represents H; a C₅-C₁₀ aryl group, preferably phenyl, a C₅-C₁₀ cycloalkyl group, preferably; or a C₁-C₃₀ preferably C₁-C₁₀ alkyl, more preferably C₁-C₅ alkyl, linear or branched, saturated or partially or totally unsaturated; preferably R is H.

8. Use according to claim 7, wherein the diamondoid ligand is chosen among compound having the following formula (VIII) or (IX) 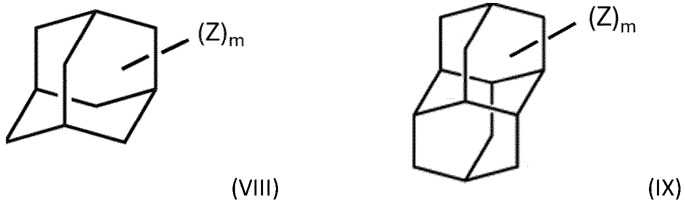 Wherein:
• Z is selected in the group of COOR, PR₂, SR or NR₂, preferably COOR or PR₂
• wherein m is from 1 to 6 in formula (I), preferably from 1 to 4, more preferably m is 2, and m is from 1 to 8 in formula (II), preferably from 1 to 6, more preferably from 1 to 4, even more preferably m is 2,
• R, identical or different, represents H; a C₅-C₁₀ aryl group, preferably phenyl, a C₅-C₁₀ cycloalkyl group, preferably cyclohexyl; or a C₁-C₃₀ preferably C₁-C₁₀ alkyl, more preferably C₁-C₅ alkyl, linear or branched, saturated or partially or totally unsaturated; preferably R is H.

9. Use according to claim 7 or 8 wherein
m is 2; or
Z is COOR or PR₂; or
Z is COOH or PH₂; or
m is 2 and Z is COOR or PR₂; or
m is 2 and Z is COOH or PH₂.

10. Process for recovering H₂ from borohydrides or borane compounds by hydrolysis or solvolysis in the presence of a metallic nanoparticle as defined in any one of claim 1 to 9.

11. Use according to any one of claim 6 to 9, or process according to claim 10, wherein boranes compounds are amine-boranes or analogous amine-boranes, hydrazine-borane.

12. Use according to any one of claim 6 to 9 and 11, or process according to any one of claim 10 or 11, wherein the borohydride is sodium borohydride (NaBH₄) or lithium borohydride (LiBH₄).

13. Use according to any one of claim 6 to 9, 11 and 12, or process according to any one of claim 10 to 12 wherein the analogous amine-borane is of formula NR₂'H-BH₃ or BH₃-NR₂'-(CH₂)ₘ- NR₂'-BH₃, wherein R' identical or different, represent H, a C₅-C₁₀ aryl group, preferably a phenyl group; or a C₁-C₃₀, preferably C₁-C₁₀ alkyl, more preferably C₁-C₅ alkyl group, linear or branched, saturated or unsaturated, m is 1, 2 or 3, preferably, the amine-borane is NH₃-BH₃ (AB), NMeH₂-BH₃ (methylamineborane MeAB), NMe₂H-BH₃ (dimethyl amine-borane DMAB) or H₃B-NH₂CH₂CH₂H₂N-BH₃ (ethylene diamine bisborane EDAB).

14. Use according to any one of claim 6 to 9 and 11 to 13, or process according to any one of claim 10 to 13, wherein the solvolysis is carried out using ethanol.

15. Process according to any one of claim 10 to 14, wherein the reaction is carried out at a temperature comprised between -90 °C and 100 °C, preferably between -40 °C and 80 °C, more preferentially between 0 °C and 30 °C, more preferentially 20 °C.

16. Process according to any one of claim 10 to 15, wherein the reaction is carried out so that the molar ratio of metal from the nanoparticle to the borane compound is comprised between 0.0001 and 0.1, preferably between 0.001 and 0.05, more preferentially between 0.01 and 0.025.

17. Process according to any one of claims 10 to 16 further comprises a step of recycling the nanoparticles, preferably the recycling is carried out by recovering the nanoparticles and washing the recovered nanoparticles with the solvent used for the hydrolysis or solvolysis of the borane compound.
